# EUROPEAN PATENT APPLICATION

(11) **EP 4 027 004 A1**
(43) Date of publication of application: **13.07.2022**
(21) Application number: 20861218.4
(22) Date of filing: 27.08.2020
(51) Int. Cl.: F03B 13/18, F03B 13/22, F03B 13/16

(54) **WAVE ENERGY ABSORBING AND CONVERTING DEVICE AND POWER GENERATION SYSTEM**

(30) Priority: 04.09.2019 CN 201910834039; 04.09.2019 CN 201910833378; 04.09.2019 CN 201910833359
(71) Applicant: Academy of Systems Engineering, PLA Academy of Military Sciences, Beijing 100166 (CN)
(72) Inventor: WANG, Weijun, Beijing 100166 (CN); LI, Bin, Beijing 100166 (CN)
(74) Representative: Viering, Jentschura & Partner mbB Patent- und Rechtsanwälte
(86) International application number: PCT/CN2020/111557
(87) International publication number: WO 2021/043049

(57) **Abstract**

Disclosed is a wave energy absorption and conversion device. The wave energy absorption and conversion device comprises a floating body (1), a guiding shaft (5), a damping plate (9) and a counteracting mechanism arranged in a movement range of the damping plate (9). The guiding shaft (5) is connected to the bottom of the floating body (1) and passes through a center of the damping plate (9). The damping plate (9) may slide on the guiding shaft (5). A counterforce generated by the counteracting mechanism is opposite to a natural moving direction of the damping plate (9), so that the damping plate (9) is kept in a static state at the middle position of the guiding shaft (5), and thereby, collision between the damping plate(9) and the constraining structure can be minimized, which may result in damage of the device and lower efficiency. The wave energy absorption, conversion device is highly reliable and highly in wave energy utilization.

## Description

### BACKGROUND OF THE INVENTION

### 1. Technical Field

The invention relates to power generation devices, in particular to wave energy power generation techniques.

### 2. Description of Related Art

At present, there are typically the following types of wave energy power generation devices:
1. Wave energy is converted into hydraulic energy to drive a turbine connected to a generator to rotate, so as to drive the generator to rotate to generate electric energy, such as the Pelamis wave energy power generation equipment of Pelamis Wave Power in Scotland and the OPT wave energy power generation device of OPT in USA. However, the wave energy power generation devices of such a structure are complex in design and high in fabrication cost and maintenance cost and have no cost advantage compared with existing dominant thermal power generation and hydraulic power generation.
2. Wave energy is converted into flowing compressed air to drive a steam turbine to rotate, so as to drive a generator to rotate to generate electric energy, and such power generation is called OWC power generation. Power generation facilities of such a structure are typically constructed on the shore and are simple in structure, reliable in performance, and low in maintenance cost. However, these power generation facilitates are low in energy conversion efficiency and are constrained by the geographic location when constructed, thus being difficult to popularize. Offshore floating-type OWC power generation equipment, such as the Mighty Whale that has been practically used in Japan, avoids the geographic constraint of the onshore facilities, but is high in fabrication cost and still has no cost advantage compared with thermal power generation and hydraulic power generation.
3. Wave energy is converted into mechanical energy to directly drive a generator to rotate to generate electric energy. Such power generation theoretically avoids the energy loss in the conversion process due to the absence of repeated energy conversion, and has an energy conversion rate higher than that of the two types of wave energy power generation devices mentioned above. However, the complexity of wave motion and the impact of huge waves on devices in an extreme weather drastically reduce system reliability, which makes such wave energy power generation devices unable to adapt to extreme sea conditions, so no complete and mature equipment has been applied yet up to now.

Of the three types of power generation devices mentioned above, the electricity generation method based on the water turbine directly impacted by seawater is theoretically ideal because it can reduce the intermediate link of energy absorption and transfer, thus improving the wave energy utilization rate. Generally, a hydraulic pump or a piston is driven by waves to inject seawater into a reservoir on the shore, and then, the water turbine is driven by a water head to generate electric energy. Or, a water channel is narrowed to guide waves to a high position, and then the water turbine is driven by a water head to generate electric energy. All these two methods have the disadvantage that wave energy is collected to a position close to the shore and thus is severely affected by the geographical location.

The offshore floating-type power generation device, such as the wave energy power generation device of WaveEL in Sweden, adopts a 20m long tubular body which is connected to a floating body and vertically stretched into sea, so the seawater height in the tubular body will not be affected by waves outside and is kept stable; the water turbine is connected to the tubular body and moves upward and downward along with waves, and when seawater moves upwards or downwards in the tubular body, vanes of the water turbine rotate to drive a generator to generate electric energy. The offshore floating-type power generation device is simple in structure, high in reliability, fully sealed, and high in storm resistance and corrosion resistance; however, it works by means of the inertia of seawater in the tubular body, which is related to the size of the vanes of the water turbine, so the wave energy utilization rate of the device is low.

The applicant has invented two wave energy power generation devices CN103939270B and CN103939269A, which, as shown in FIG. 1 and FIG.2, comprise a generator mounted in a floating body, and a water turbine connected to the generator in the floating body through a power output shaft. A piston pressurizing device is arranged below the floating body. When the floating body drives a piston sleeve and a central guiding shaft to move upward and downward along with waves, the piston is kept in a static state in water due to inertia and resistance, resulting in a relative movement between the piston and the piston sleeve, so as to form alternate positive and negative pressure in an inner cavity of the piston sleeve, so that the seawater flows back and forth in a water running channel to impact the vanes of the water turbine in the water running channel to drive the generator to generate electric energy,. The power generation devices solve the problem of complex structure, high fabrication cost and maintenance cost and low long-term operating reliability of existing wave energy power generation devices.

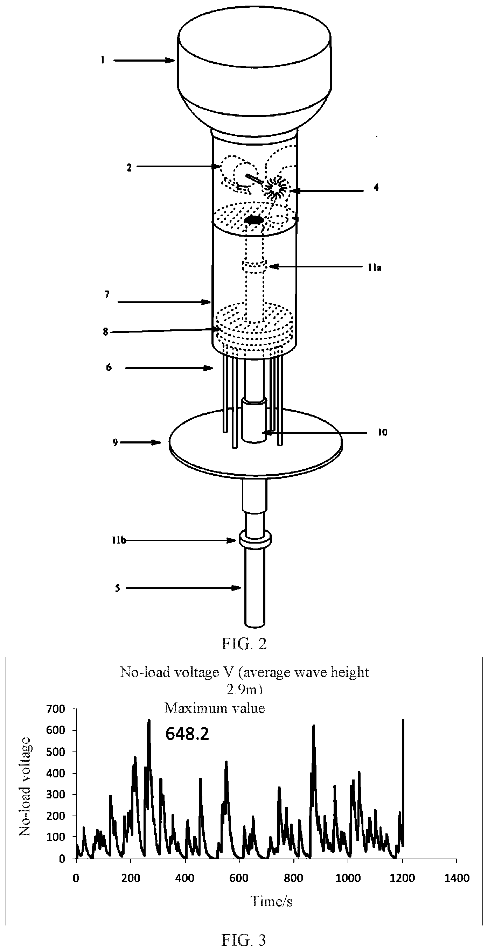

These two power generation devices are feasible in theory, but have the following problems in actual operation: a damping plate is designed underwater, and according to the design scheme, the buoyancy force of the damping plate should be equal to the gravity thereof to ensure that the damping plate is suspended in the middle of a movement range thereof, which may be realized under an ideal condition; in fact, it is impossible to fabricate a damping plate having the buoyancy force being equal to the gravity, and even if the buoyancy force and the gravity of the damping plate are equal, the underwater position of the damping plate is uncontrollable. So, under the actual condition, the damping plate in water always has an upward or downward moving trend due to its gravity or buoyance force, and will automatically move toward one end of the movement range rather than being located in the middle position as designed, so when driven by waves to move upward or downward, the damping plate will be inevitably contact and collide with constraining structures or the lower end of a piston sleeve, resulting in the loss of a relative movement between the piston and the piston sleeve within a period of time, and at this moment, wave energy will not be absorbed and the capacity to capture wave energy is disabled. In an actual running test, the applicant found that each wave motion period was about 7s, while the loss of the relative movement caused by the collision between the damping plate and the constraining structures lasted for about 3s, which led to repeated stop and start of the generator, thus greatly reducing the power generation efficiency of the device. The applicant also found by study that, compared with the theoretical design state, the efficiency was reduced by about 80% under this condition. A voltage output measured is shown in FIG. 3. As can be seen from FIG. 3, the voltage output by the device was intermittent rather than continuous within 0V-648.2V and cannot be rectified or inverted, so electric energy obtained by the device cannot be used, and the device is not suitable for practical application.

### BRIEF SUMMARY OF THE INVENTION

In view of the defects of the prior art, the objective of the invention is to provide a wave energy absorption and conversion device and a power generation system, which remarkably improve the wave energy utilization rate by means of simple structural improvements.

The technical solution adopted to fulfill the above objective of the invention is as follows:

In one aspect, the invention provides a wave energy absorption and conversion device, comprising a floating body, a damping plate and a guiding shaft. The guiding shaft is connected to the bottom of the floating body and passes through a center of the damping plate. The damping plate is able to slide on the guiding shaft, that is, the damping plate relatively movably sleeves the guiding shaft. Constraining structures are arranged above and/or below the damping plate to constrain a movement range of the damping plate on the guiding shaft. Under the action of waves, the floating body drives the guiding shaft to move upward or downward synchronously with respect to the damping plate to output mechanical energy.

According to an improvement of the invention, a counteracting mechanism is placed at or near a middle position of the movement range of the damping plate on guiding shaft to counteract an upward or downward moving trend of the damping plate. A counterforce of the countering mechanism is a gravity of a counterweight or a buoyancy force of a buoyancy tank, and is opposite to a natural moving direction of the damping plate. In absence of an external force, the damping plate will stop when contacting the counteracting mechanism, that is, the damping plate will not move upward or downward automatically. Under the action of waves, the floating body drives the guiding shaft to move upward or downward with respect to the damping plate, and the movement range of the damping plate is between the upper and lower constraining structures, so the damping plate is kept in a static state on the guiding shaft at the middle position of the movement range under water due to a synergistic effect of self-resistance and the counteracting mechanism, and within a wave height range, will not collide with the upper and lower constraining structure, the floating body or parts moving along with the floating body.

In this solution, when the buoyancy force of the damping plate is designed to be greater than the total gravity carried thereby (the weight of all structures connected to the damping plate), a counterweight is loaded on the damping plate to make the sum of gravities carried by the damping plate greater than the sum of buoyancy forces thereof. When moving upward from a lower end of the movement range, the damping plate combines with the counterweight at the middle position (the damping plate just leans against the counterweight rather than being fixedly combined with the counterweight); in absence of an external force, the damping plate and the counterweight will stop at an initial combination position, namely the middle position of the movement range; in presence of an external force, the damping plate and the counterweight will continue to move upward together, but due to the fact that the gravities of the damping plate and the counterweight are greater than the buoyance forces thereof, the natural moving trend turns upward, thus weakening rising energy of the damping plate and the counterweight; and in a wave height range, collision between the damping plate and the upper constraining structure, the floating body or parts moving along with the floating body is avoided because the damping plate starts to move downward before the collision. When moving downward to the initial combination position, the damping plate and the buoyance tank are separated naturally.

In this solution, when the total gravity carried by the damping plate is designed to be greater than the buoyancy force thereof, a buoyancy tank is loaded on the damping plate, so that the sum of buoyancy forces of the damping plate and the buoyancy tank is greater than the sum of gravities carried thereby. When the damping plate moves downward from an upper end of the movement range, it combines with the buoyancy tank at the middle position; in absence of an external force, the damping plate and the buoyance tank will stop at an initial combination position, namely the middle position. In presence of an external force, the damping plate and the buoyance tank will continue to move downward together, but due to the fact that the buoyance forces of the damping plate and the buoyance tank are greater than the gravities thereof, the natural moving direction turns upward, thus weakening downward movement energy of the damping plate and the buoyancy tank; and within a wave height range, collision between the damping plate and the lower constraining structure, the floating body or parts moving along with the floating body is avoided because the damping plate starts to move upward before the contact. When moving upward to the initial combination position, the damping plate and the buoyance tank are separated naturally.

Further, when the counterweight is loaded on the damping plate, the counterweight is dangled above the damping plate with a soft chain and is located at the middle position of the movement range of the damping plate, and the soft chain is connected to the guiding shaft or a part integrated and moving with the guiding shaft. The soft chain may be at any length, preferably a length enabling the counterweight to be located at the middle position of the movement range of the damping plate. Such a connection manner of the counterweight is merely an illustrative one, and is not the unique one of the invention.

When the buoyance tank is loaded on the damping plate, the buoyancy tank is pulled with a soft chain and is connected and suspended below the damping plate, and the soft chain is connected to the guiding shaft or a part integrated and moving with the guiding shaft. The soft chain may be at any length, preferably a length enabling the buoyancy tank to be located in the middle position of the movement range of the damping plate. Such a connection manner of the buoyance tank is merely an illustrative one, and is not the unique one of the invention.

Further, the constraining structure is a structure arranged above and/or below the guiding shaft or a part integrally connected and fixed to the floating body, and the structure and part are located above and/or below the damping plate to constrain the movement range of the damping plate not loaded with the counteracting mechanism.

The wave energy absorption and conversion device of the invention has a wide application range. For example, the wave energy absorption and conversion device may be used to improve the wave energy power generation devices CN103939270B and CN103939269A previously invented by the applicant.

Thus, the invention further provides a wave energy power generation system, comprising a wave energy absorption and conversion device and a power generation mechanism, wherein the power generation mechanism is arranged at a power output end of the wave energy absorption and conversion device to convert wave energy into electric energy.

The power generation mechanism in the power generation system may be in multiple forms:
The power generation mechanism may be a piston pressurizing water turbine power generation device, comprising a generator mounted in a floating body and connected with a water turbine via an energy transfer shaft, and a piston pressurizing device is located below the floating body. The piston pressurizing device is located under a water surface and comprises piston sleeve and a piston mounted in fit with the piston sleeve, and a guiding shaft passes through the piston sleeve and the piston. The piston sleeve is connected below the floating body, and the water turbine is located in an open water running channel at the top of the piston sleeve. The bottom of the piston is in rigid connection with the damping plate, and the end surface area of the damping plate is greater than that of the bottom of the piston.

When the floating body drives the piston sleeve and the central guiding shaft to move upward or downward along with waves, the piston moves with respect to the piston sleeve due to a synergistic effect of the damping plate and the counteracting mechanism so as to form alternate positive and negative pressure in an inner cavity of the piston sleeve, so that seawater flows back and forth in the water running channel to impact vanes of the water turbines in the water running channel, and the vanes rotate to the generator to generate electric energy.

The power generation mechanism may be an oil pump hydraulic motor power generation device which comprises a hydraulic pump, a hydraulic motor and a generator mounted in a floating body. A push rod of the hydraulic pump is connected to a damping plate via a transmission piece, the floating body and the damping plate move relatively under the action of waves, a piston in the hydraulic pump is pushed to move by a transmission piece and the push rod, and liquid in the hydraulic pump pushes the hydraulic motor so as to drive the generator to generate electric energy.

The power generation mechanism may be a linear motor or a magnetic motor. When the power generation mechanism is a linear motor power generater, the linear motor power generater comprises a linear motor stator, a push rod and a linear motor sliding part, wherein the linear motor stator is fixed in a floating body, the linear motor sliding part is matched with the linear motor stator and slides with respect to the linear motor stator, and the push rod is connected to and drives the linear motor sliding part and is connected to the damping plate via a transmission piece; and the floating body and the damping plate move relatively under the action of waves, and the linear motor sliding part is driven by the transmission piece and the push rod to move upward or downward with respect to the linear motor stator so as to generate electric energy.

From the above description, the invention designs a wave energy absorption and conversion device which is high in wave energy utilization rate; a force for counteracting the buoyancy or gravity of the damping plate is loaded at the middle position of the movement range of the damping plate, so when the damping plate moves to the middle position of the movement range by means of the buoyancy or gravity of itself, the counteracting force is loaded to prevent the damping plate from moving automatically and make the damping plate suspend at the position where the counteracting force is loaded (the middle area of the movement range of the damping plate). The counteracting mechanism prevents the damping plate from moving towards two ends of the moving range naturally, so that when the floating body and the guiding shaft are driven to move by waves, the damping plate moves upward or downward with a joint point as the center, so that collision and contact between the damping plate and the constraining structures or the floating body are avoided; and the floating body and the damping plate always move relative to each other, so that wave energy is absorbed and converted continuously.

The wave energy absorption and conversion device and the power generation system have the advantages of being high in wave energy utilization rate, simple in structure, reliable in operation, high in storm resistance and corrosion resistance, and easy to maintain, can reduce wave energy power generation cost, have higher competitiveness than traditional energy production, and may meet power supply demands of distant island reefs and electricity demands of seawater desalination.

### BRIEF DESCRIPTION OF THE SEVERAL VIEWS OF THE DRAWINGS

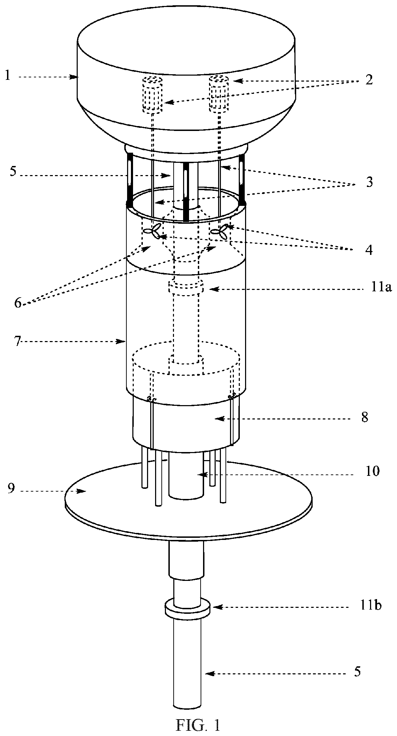

FIG. 1 is schematic diagram of a wave energy power generation device in the prior art (CN103939270A).
FIG. 2 is a schematic diagram of a wave energy power generation device in the prior art (CN103939269B).
FIG. 3 is a voltage output chart of the wave energy power generation device in the prior art (CN103939270A).
FIG. 4 is a voltage output chart of a wave energy power generation device of the invention.
FIG. 5 is a structural principle diagram of a wave energy absorption and conversion device of the invention (a counteracting mechanism adopts a counterweight).
FIG. 6 is a structural principle diagram of a wave energy absorption and conversion device of the invention (a counteracting mechanism adopts a buoyance tank);
FIG. 7 is a schematic diagram of a specific implementation structure of a power generation device of the invention.

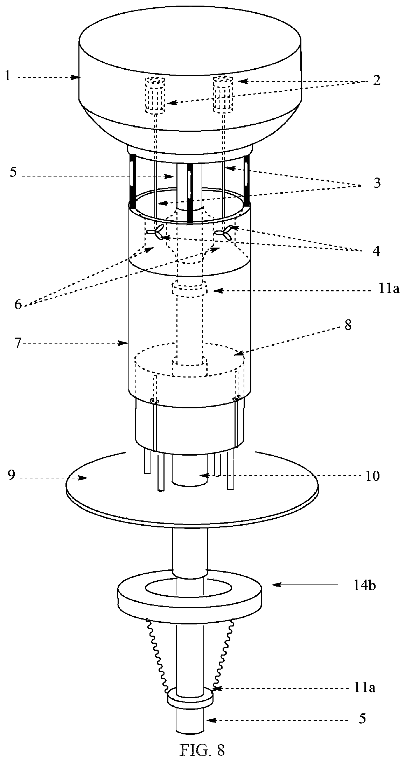

FIG. 8 is a schematic diagram of another specific implementation structure of the power generation device of the invention.
FIG. 9 is a structural principle diagram a counteracting mechanism adopting a multistage loading way of the wave energy absorption and conversion device the invention.
FIG. 10 is structural principle diagram of a counteracting mechanism adopting a mixing and multistage loading way of the wave energy absorption and conversion device the invention.
FIG. 11 is a structural diagram of a wave energy power generation device with a power generation mechanism being a piston pressurizing water turbine power generation device.
FIG. 12 is a structural diagram of a wave energy power generation device with a power generation mechanism being a linear motor.

Reference signs: 1, floating body; 2, generator; 3, power output shaft; 4, water turbine; 5, guiding shaft; 6, water running channel; 7, piston sleeve; 8, piston; 9, damping plate; 10, central shaft sleeve; 11a, upper constraining structure; 11b, lower constraining structure; 12, guiding groove; 13, power generation mechanism; 14a, counterweight; 14b, buoyancy tank; 15, push rod; 16, hydraulic pump; 17, hydraulic motor; 18, linear motor stator; 19, linear motor sliding part.

### DETAILED DESCRIPTION OF THE INVENTION

The invention will be further explained below in conjunction with the accompanying drawings and multiple non-restrictive embodiments.

### Embodiment 1:

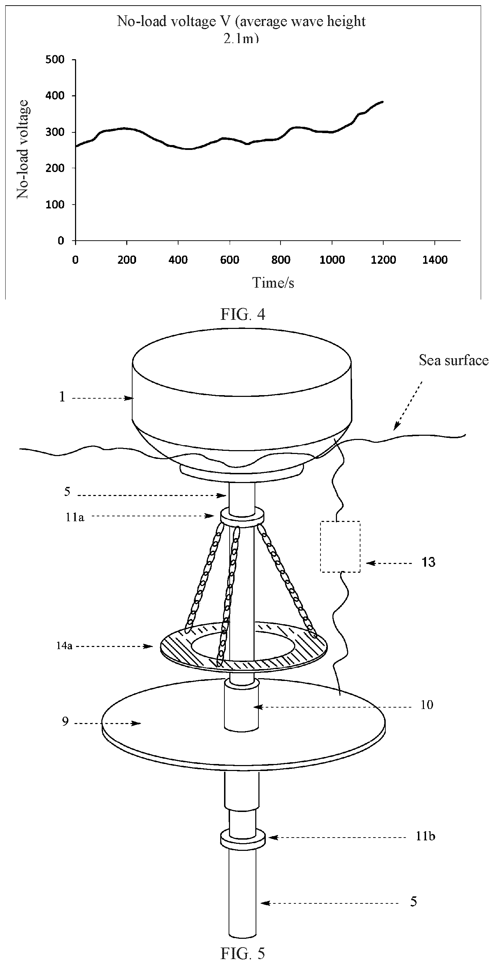

Referring to FIG. 5, in this embodiment, a wave energy absorption and conversion device comprises a floating body 1, a damping plate 9, a guiding shaft 5 and a counteracting mechanism. The guiding shaft 5 is connected to the bottom of the floating body 1 and vertically passes through a center of the damping plate 9, and the damping plate is able to slide on the guiding shaft 5. Constraining structures 11a and 11b are arranged above and/or below the guiding shaft 5 to constrain a movement range of the damping plate between the two constraining structures 11a and 11b. Under the effect of waves, the floating body 1 drives the guiding shaft 5 to move upward or downward with respect to the damping plate to output mechanical energy to a power generation mechanism 13 (shown by the dotted line in FIG. 5, it should be noted that the description here is merely illustrative and does not reflect an actual structural connection relation).

In this embodiment, the counteracting mechanism is placed at or near the middle position of the movement range of the damping plate to counteract an upward or downward moving trend of the damping plate. A counterforce of the counteracting mechanism is a gravity of a counterweight 14a or a buoyance force of a buoyancy tank 14b.

In this embodiment, due to the fact that the sum of buoyancy forces of the damping plate 9 and a load (such as a piston 8) thereof is greater than the sum of gravities thereof, the counterweight 14a is disposed above the damping plate 9 to serve as the counteracting mechanism, the counterforce of the counterweight 14a is opposite to a natural moving direction of the damping plate 9, so that the damping plate is kept static under water at the middle position of the movement range under a synergistic effect of self-damping and the counteracting mechanism; and within a designed wave height range, collision between the damping plate and the upper constraining structure 11a, the floating body, or parts moving along with the floating body is avoided, thus avoiding a failure of movement.

### Embodiment 2:

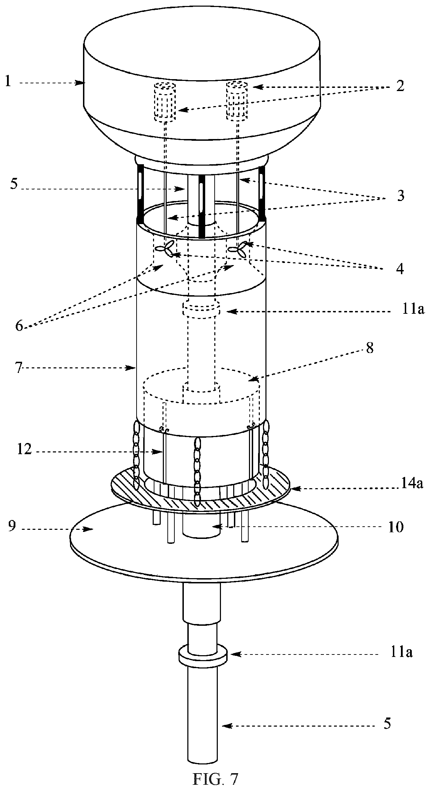

A specific wave energy power generation system is obtained by combining the structure in Embodiment 1 with a piston pressurizing water turbine power generation device, as shown in FIG. 7. The piston pressurizing water turbine power generation device of the system comprises a generator 2, a water turbine 4 and a piston pressurizing device. Specifically, the generator 2 is mounted in the floating body 1, and the water turbine 4 and the piston pressurizing device are mounted below the floating body 1.

The piston pressurizing device of the system comprises a piston 8 and a piston sleeve 7. The piston sleeve 7 is connected below the floating body 1, and the top of the piston sleeve formed with an open water running channel 6, and seawater enters the piston sleeve via the water running channel 6. The water turbine 4 is located in the water running channel 6 at the top of the piston sleeve and is connected to the generator 2 in the floating body 1 through an energy output shaft 3 to supply power to the generator 2.

The guiding shaft 5 at the bottom of the floating body 1 passes through the piston sleeve 7 below the floating body 1, the piston 8 mounted in fit with the piston sleeve 7 and the center of the damping plate 9 to guide and constrain movements thereof. Two constraining structures are mounted on the guiding shaft 5, wherein an upper constraining structure 11a is located in the piston sleeve 7, a lower constraining structure 11b is located outside the piston sleeve 7, the piston 8 is mounted on the guiding shaft 5 between the two constraining structures 11a and 11b through a central shaft sleeve 10 and is in rigid connection with the damping plate 9, and the piston 8 and the damping plate 9 are able to move upward or downward along the central guiding shaft 5. The counterweight 14a above the damping plate 9 is dangled at the lower end of the piston sleeve 7 with a soft chain, and the soft chain is at a length enabling the counterweight 14a to be located at or near the middle position of the movement range of the damping plate 9. The gravity of the counterweight 14a counteracts a natural upward moving force of the damping plate 9 to keep the damping plate 9 in a static state in water due to a synergistic effect of self-resistance and the counteracting mechanism, so that with a designed wave height range (when the device is designed, the relative movement range of the floating body and the damping plate matches a common wave height in a sea area where the device is applied), collision between the damping plate and the upper and low constraining structures 11a and 11b is avoided, and collision between the damping plate and the floating body 1 or other parts moving along with the floating body 1 such as the piston sleeve 7 in this embodiment is also avoided, thus avoiding a failure of movement and improving energy conversion efficiency.

By adoption of the power generation system, when the floating body 1 drives the piston sleeve 7 and the guiding shaft 5 to move upward or downward along with waves, the piston 8 is kept in a static state due to a synergistic effect of the damping plate 9 and the counterweight 14a, so as to result in a continuous relative movement of the piston 8 and the piston sleeve 7 and form alternate positive and negative pressure in an inner cavity of the piston sleeve 7, so that the seawater flows back and forth in the water running channel 6 to impact vanes of the water turbine 4 in the water running channel 6, and then the vanes rotate to drive the generator 2 to generate electric energy stably.

Referring to FIG. 4, experiments show that a voltage output by the system has a continuous and stable waveform within 260-400V, which indicates that the power generation continuity of the system is good, and the power generation efficiency of the system is remarkably improved.

It should be noted that the arrangement manner of the counteracting mechanism in this embodiment is merely an illustrative one, and should not be construed as a limitation of the invention.

### Embodiment 3:

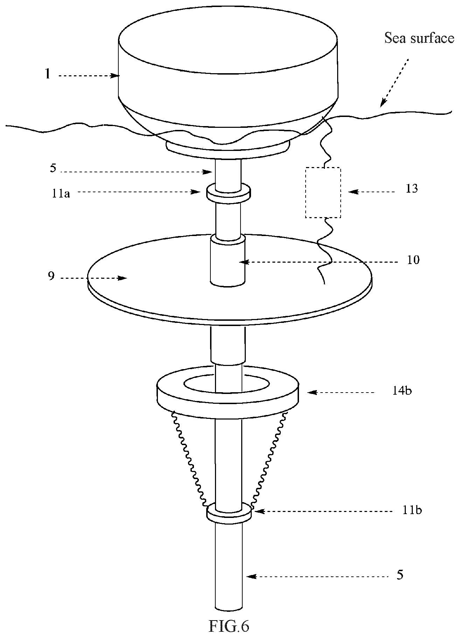

Referring to FIG. 6, in this embodiment, the sum of buoyance forces of the damping plate 9 and the piston 8 loaded on the damping plate 9 is smaller than gravities thereof, in this case, a buoyance tank 14b is arranged below the damping plate 9 to counteract a downward moving trend of the damping plate, and the buoyance tank 14b is pulled with a soft chain and is suspended below the damping plate 9 with the soft chain. The soft chain is at a length enabling the buoyancy tank 14b to be located in the middle position of the movement range of the damping plate 9. When damping plate 9 moves downwards from the upper end of the movement range, it combines with the buoyance tank 14b at the middle position. In absence of an external force, the damping plate 9 and the buoyance tank 14b will stop at an initial combination position. In presence of an external force, the damping plate 9 and the buoyance tank 14b will continue to move downward together, but due to the fact that the buoyance forces of the damping plate 9 and the buoyance tank 14b are greater than the gravities thereof, the natural moving trend turns upward, thus weakening downward movement energy of the damping plate and the buoyance tank. Within wave height range set by the system, collision between the damping plate 9 and the lower constraining structure 11b or parts moving along with the floating body 1 is avoided because the damping plate 9 starts to move upwards before the collision under the action of a counteracting force. When moving upward to the initial combination position, the damping plate 9 and the buoyance tank 14a are separated naturally to obtain a continuous reciprocating movement to output stable wave energy to the power generation mechanism.

### Embodiment 4:

Similarly, another specific wave energy power generation system is obtained by combining the structure in Embodiment 3 with a piston pressurizing water turbine power generation device. The piston pressurizing water turbine power generation device comprises a generator 2, a water turbine 4 and a piston pressurizing device, wherein the generator 2 is mounted in the floating body 1, the water turbine 4 and the piston pressurizing device are mounted below the floating body 1, which are the same as Embodiment 2 and will no longer be detailed. The difference lies in that the counteracting mechanism, namely the buoyance tank 14b, is arranged below the damping plate 9.

### Embodiment 5:

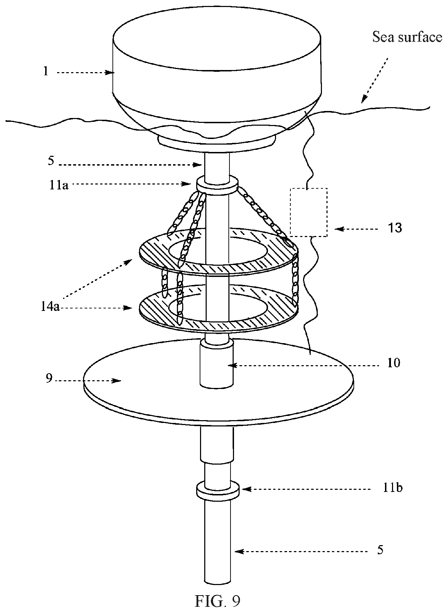

As for the devices in Embodiment 1 and Embodiment 3, when the wave height is far greater than a desired operating wave height designed, collision between the damping plate and the constraining structures, the floating body or other parts moving along with the floating body will still be caused, so a further counteracting mechanism solution may be adopted in this case. As shown in FIG. 9, the counteracting mechanism adopts a multistage loading counterweight (or buoyance tank) way, i.e., one counterweight (or more counterweights as required by the circumstance) are loaded, and the counterweights are connected with soft chains or in other manners. In this way, collision between the damping plate and the constraining structures is further avoided.

### Embodiment 6:

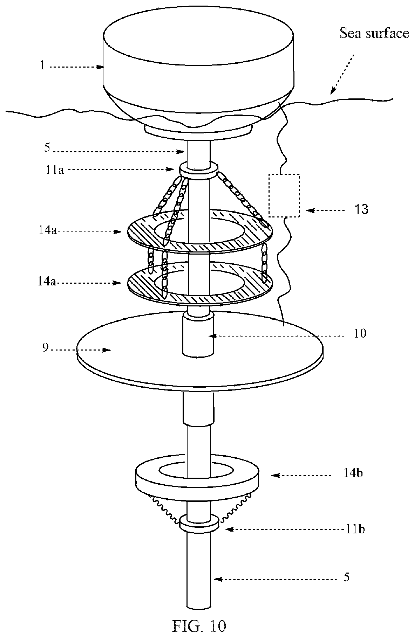

Referring to FIG. 10, in a more complicated application scenario of the device, in order to apply a proper counterforce to the damping plate, a mixing and multistage loading way is adopted, i.e., either counterweights or buoyancy tanks are loaded, and the counterweights and the buoyance tanks are arranged in multiple stages. For example, two stages of counterweights are loaded in FIG. 10.

The above loading manners adopted for the counteracting mechanism 14 of the invention are illustrative basic ones of the patent, but the invention is not limited to these loading manners disclosed. Any one counterforce opposite to the natural moving direction of the damping plate may be loaded on the damping plate 9 in any manner at the middle position of the movement range of the damping plate 9 to ensure that when a relative movement between the damping plate and the guiding shaft is caused by waves, the damping plate moves in the middle area of the movement range and will not collide with the upper constraining structure 11a, the floating body 1 or parts moving along with the floating body within a certain wave height range.

### Embodiment 7

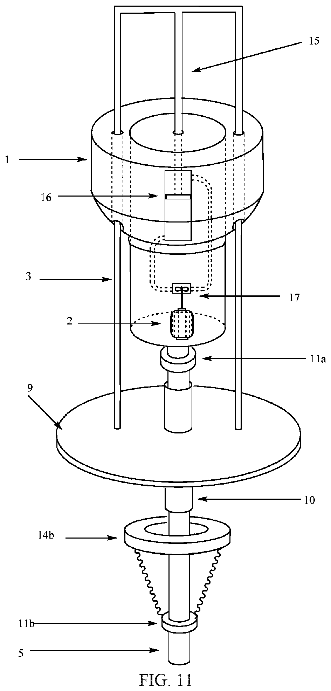

Referring to FIG. 11, in this embodiment, the power generation mechanism is an oil pump hydraulic motor power generation device which comprises a hydraulic pump 16, a hydraulic motor 17 and a generator 2 mounted in the floating body 1. A push rod 15 of the hydraulic pump 16 is connected to the damping plate 9 via a transmission piece 3, the floating body 1 and the damping plate 9 move relatively under the action of the waves, a piston in the hydraulic pump 16 is pushed by the transmission piece 3 and the push rod 15 to move, and liquid in the hydraulic pump pushes the hydraulic motor 17 so as to drive the generator 2 to generate electric energy.

### Embodiment 8

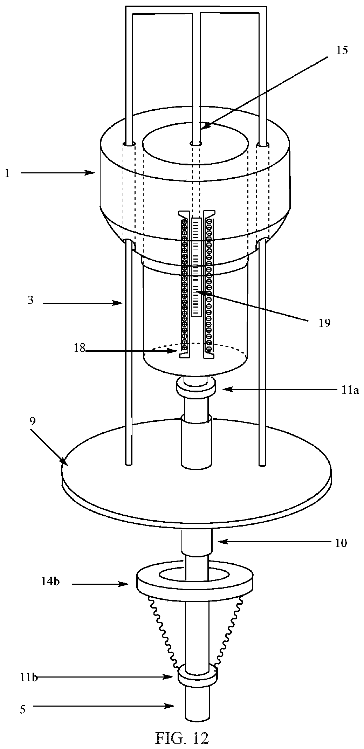

Referring to FIG. 12, in this embodiment, the power generation mechanism 13 is a linear motor power generater which comprises a linear motor stator 18, a push rod 15 and a linear motor sliding part 19. The linear motor stator 18 is fixed in the floating body 1, and the linear motor sliding part 19 is matched with the linear motor stator 18 and slides with respect to the linear motor stator to generate electric energy. The push rod 15 is connected to the damping plate 9 via the transmission piece 3 and is connected with and drives the linear motor sliding part 19 after passing through the floating body 1. The floating body 1 and the damping plate 9 move relatively under the action of waves, and the linear motor sliding part 19 is driven by the transmission piece 3 and the push rod 15 to move upward or downward with respect to the linear motor stator 18 so as to generate electric energy.

The power generation systems in Embodiment 2, Embodiment 4, Embodiment 7 and Embodiment 8 are merely several specific applications of the wave energy absorption and conversion device, and output wave energy may also be converted into electricity in other power generation forms. In addition, electric energy obtained by the power generation system may be output through a power output line or a facility with a similar function, which all belongs to the prior art.

As can be seen from the above embodiments, the wave energy absorption and conversion device and the power generation system disclosed by the invention have good storm resistance because most structures, particularly relatively moving structures, are located under the water surface, thus being high in reliability; and power generation equipment and control parts are all sealed in the floating body and can be effectively protected again seawater corrosion, and the maintenance cost is reduced.

The device and system provided by the invention are simple in structure and low in fabrication cost and maintenance cost, high in wave energy utilization rate and high in long-term operating reliability.

The above embodiments are used to explain the concept of the invention. Clearly, all the embodiments described above are illustrative ones, and are not all possible ones of the invention. All other embodiments obtained by those ordinarily skilled in the art based on the design scheme of the invention without creative labor should also fall within the protection scope of the invention.

## Claims

1. A wave energy absorption and conversion device, comprising a floating body (1), a damping plate (9) and a guiding shaft (5), the guiding shaft (5) being connected to the bottom of the floating body (1), the damping plate (9) relatively movably sleeving the guiding shaft (5), constraining structures being arranged above and/or below the damping plate (9) to constrain the movement range of the damping plate (9) on the guiding shaft, and the floating body (1) moving up and down together with the guiding shaft (5)driven by wave action result inrelative movement in related to damping plate (9), which is for power take-off system to generate energy.
the wave energy absorption and conversion device being **characterized in that** a counteracting mechanism (14) is placed at/or near the middle position of the movement range of the damping plate(9)on guiding shaft (5)to counteract an upward or downward moving trend of the damping plate (9), to keep the damping plate (9) steady at/or near the middle position of the movement range of the damping plate(9);
a counterforce of the counteracting mechanism (14) is gravity of a counterweight (14a) or a buoyancy force of a buoyancy tank (14b); the counterforce is opposite to the natural moving direction of the damping plate (9), so as to keep the damping plate (9) at the middle position of the movement range on the guiding shaft(5),and when the floating body(1) drives the guiding shaft(5)move in related to the damping plate(9)under certain wave height, collision between the damping plate(9) and the constraining structures above and below can beminimized, and preventing the device from damaging and lower efficience.

2. The wave energy absorption and conversion device according to claim 1, **characterized in that** when the buoyancy force of the damping plate (9) is designed to be greater than the total gravity carried thereby, the upward moving trend of the damping plate(9) is counteracted, and the counterweight (14a) is loaded on the damping plate(9)to make the sum of the gravity carried by the damping plate (9) greater than the sum of buoyancy forces thereof; when damping plate (9) is moving upward from the lower end of the movement range it combines with the counterweight(14a)at the middle position, asthe redundant buoyancy force of the damping plate(9) is counteracted by counterweight (14a) the damping plate(9) stays at the middle position of movement range, so that under certain wave height, collision between the damping plate (9) and constraining structure(11)above and below can be minimized, which result in damage and lower efficiency of the device.

3. The wave energy absorption and conversion device according to claim 1, **characterized in that** when the total carried gravity of the damping plate (9) is designed to be greater than the buoyancy force thereof, the downward moving trend of the damping plate is counteracted, and anbuoyancy tank (14b) is loaded on the damping plate (9), so that the sum of the buoyancy forces of the damping plate (9) is greater than the sum of gravities carried thereby; when damping plate (9) is moving down ward from the up end of the movement range it combines with the buoyancy tank (14b) at the middle position, as the redundant gravity force of the damping plate(9) is counteracted by buoyancy tank (14b) the damping plate(9) stays at the middle position of movement range, so that under certain wave height, collision between the damping plate (9) and constraining structure above and below can be minimized, which result in damage and lower efficiency of the device.

4. The wave energy absorption and conversion device according to claim 1 or2, **characterized in that** the counterweight (14a) is dangled above the damping plate (9) with a soft chain, and the soft chain is connected with a certain part of the guiding shaft (5) or anywhere making this function efficient. and the soft chain may be at any length, preferably a length enabling the counterweight (14a) to be located at the middle position of the movement range of the damping plate (9).

5. The wave energy absorption and conversion device according to claim 1 or3, **characterized in that** the buoyancy tank (14b) is pulled and suspended below the damping plate (9) with a soft chain, and the soft chain is connected to a certain part of the guiding shaft (5) or anywhere making this function efficient; and the soft chain may be at any length, preferably a length enabling the buoyancy tank (14b) to be located in the middle position of the movement range of the damping plate (9).

6. The wave energy absorption and conversion device according to claim 4 or 5, **characterized in that** the counteracting mechanism (14) adopts a multistage loading way, i.e., a plurality of counterweights (14a) or a plurality of buoyancy tanks (14b) are loaded, each of the counterweights or each of the buoyancy tanks being connected together with the soft chains in sequence.

7. The wave energy absorption and conversion device according to claim 4or 5, **characterized in that** the counteracting mechanism (14) adopts a mixing and multistage loading way, i.e., either one or more of counterweights (14a) or one or more of buoyancy tanks (14b) are loaded, each of the counterweights or each of the buoyancy tanks being connected together with the soft chains in sequence.

8. The wave energy absorption and conversion device according to any one of claims 1-7, **characterized in that** the constraining structure is a structure arranged on the upper and/or the lower part of the guiding shaft or a certain partintegrally fixed with the floating body to constrain the movement range of the damping plate(9).

9. A wave energy power generation system, **characterized by** comprising the wave energy absorption and conversion device according to claims 1-8and a power generation mechanism (13), the power generation mechanism (13) being arranged at a power output end of the wave energy absorption and conversion device to convert wave energy into electric energy.

10. The wave energy power generation system according to claim 9, **characterized in that** the power generation mechanism (13) is a piston pressurizing water turbine power generation device, comprising a generator (2), a water turbine (4) and a piston pressurizing device;
wherein the generator (2) is mounted in the floating body (1) of the wave energy absorption and conversion device and is connected with the water turbine (4) via an energy transfer shaft, and the piston pressurizing device is located under a water surface below the floating body (1);
the piston pressurizing device comprises a piston sleeve (7) and a piston (8) mounted in fit with the piston sleeve, the guiding shaft (5) passes through the piston sleeve (7) and the piston (8) mounted in fit with the piston sleeve, the piston sleeve is fixed below the floating body (1), the top of the piston sleeve is open, and the water turbine (4) is located in a water running channel (6) located at the top of the piston sleeve (7); and the bottom of the piston (8) is in rigid connection with the damping plate (9), and the end surface area of the damping plate (9) is greater than that of the bottom of the piston (8); and
when the floating body (1) drives the piston sleeve (7) and the guiding shaft (5) to move up and down along with waves, the piston (8) and the piston sleeve (7) are kept in move relatively due to a synergistic effect of the piston (8) and the damping plate (9) so as to form alternate positive and negative pressure in the inner cavity of the piston sleeve (7), so that the seawater flows back and forth in the water running channel (6) to drive the water turbine (4) and the generator (2) to generate electricity.

11. The wave energy power generation system according to claim 9, **characterized in that** the power generation mechanism (13) is an oil pump hydraulic motor power generation device which comprises a hydraulic pump (16), a hydraulic motor (17) and a generator (2) mounted in the floating body (1), wherein a push rod (15) of the hydraulic pump (16) is connected with the damping plate (9) via a transmission piece (3), the floating body (1) and the damping plate (9) generate a relative movement under the action of the waves, a piston in the hydraulic pump (16) is pushed by the transmission piece (3) and the push rod (15), and the liquid in the hydraulic pump pushes the hydraulic motor (17) so as to drive the generator (2) to generate electricity.

12. The wave energy power generation system according to claim 9, **characterized in that** the power generation mechanism (13) is a linear motor power generator which comprises a linear motor stator (18), the push rod (15) and a linear motor sliding part (19), wherein the linear motor stator (18) is fixed in the floating body (1), the linear motor sliding part (19) is matched with the linear motor stator (18) and slides relative to the linear motor stator, and the push rod (15) is connected with and drives the linear motor sliding part (19) and is connected with the damping plate (9) via the transmission piece (3); and the floating body (1) and the damping plate (9) generate a relative movement under the action of waves, and the linear motor sliding part (19) is driven by the transmission piece (3) and the push rod (15) to move up and down relative to the linear motor stator (18) so as to generate electric energy.
